# EUROPEAN PATENT APPLICATION

(11) **EP 3 395 655 A1**
(43) Date of publication of application: **31.10.2018**
(21) Application number: 16878623.4
(22) Date of filing: 19.12.2016
(51) Int. Cl.: B62D 25/08

(54) **VEHICLE BODY STRUCTURE**

(30) Priority: 24.12.2015 JP 2015251178
(71) Applicant: Mitsubishi Jidosha Kogyo Kabushiki Kaisha, Tokyo 108-8410 (JP)
(72) Inventor: SHIBATA, Koki, Tokyo 108-8410 (JP)
(74) Representative: Vossius & Partner Patentanwälte Rechtsanwälte mbB
(86) International application number: PCT/JP2016/087759
(87) International publication number: WO 2017/110734

(57) **Abstract**

A vehicle body structure includes a cowl top extending in a vehicle widthwise direction of the vehicle, a strut tower located in front of the cowl top and supporting a shock absorber, a cowl top lower, which forms a lower part of the cowl top, extending in the vehicle widthwise direction and connected to framework members on both sides of the vehicle widthwise direction, a reinforcement member connected to a lower side of the cowl top lower and extending in the vehicle widthwise direction so as to form a closed cross-sectional structure together with the cowl top lower; and a first joint where an end portion of the cowl top lower in the vehicle widthwise direction is connected to an upper surface of the strut tower so as to overlap and cover the upper surface.

## Description

### TECHNICAL FIELD

The present disclosure relates to a vehicle body structure of an automobile and particularly relates to a vehicle body structure in which strut towers provided on both sides of a vehicle widthwise direction for fixing shock absorbers of front wheels are strongly coupled to improve the handling and stability of the vehicle body.

### BACKGROUND ART

In vehicles such as passenger cars, a strut front suspension is often adopted as a suspension device for front wheels, which are generally steered wheels. To support the strut front suspension, a pair of right and left suspension towers, i.e. strut towers, is formed from a steel plate into a tower-like shape as a part of vehicle body members in an engine room of the vehicle so that the shock absorbers of the strut front suspension are fixed on top portions of the strut towers.

During vehicle traveling, the strut towers are strongly exposed to input from wheels. Since the strut front suspension is angled inward in the vehicle widthwise direction at a top portion for the sake of the traveling performance of the vehicle, if the input from wheels is applied to the strut towers via the front suspension, the strut towers and peripheral members made of steel plates are easily bent, and the strut towers easily tilt and fall inward in the vehicle widthwise direction.

In addition, base parts of the strut towers are mounted to respective side member frames of vehicle body components, while an engine and a transmission are disposed close thereto. Thus, the base parts of the strut towers are exposed to the engine vibration in the front-rear direction and in the right-left direction of the vehicle body, which easily causes deformation of the base parts of the strut towers.

If the strut towers tilt and fall in the vehicle widthwise direction or in the vehicle front-rear direction, the inclination angle of the strut front suspension is slightly changed, and the handling performance of the wheels is unfavorably affected. Accordingly, there are known techniques regarding a vehicle body structure to prevent the fall of the strut towers and improve the handling and stability.

Patent Document 1 shows a structure in which side walls of a pair of right and left strut towers (suspension towers) supporting a strut suspension are connected to a front wall (side wall) of a cowl top extending along an upper edge of a dash panel by gussets. It is also shown that the gusset has an opening part opening to the side wall of the cowl top and is connected to the side wall of the cowl top so as to form a closed cross-sectional structure.

Patent Document 2 discloses a configuration which includes a beam-like cowl top connecting right and left front pillars of a vehicle to each other and a rod-like strut tower bar integrally connecting upper parts of right and left strut towers located in front of the cowl top and provided apart from each other in the vehicle widthwise direction.

### Citation List

### Patent Literature

Patent Document 1: JP2005-75133A
Patent Document 2: JP2008-284925A

### SUMMARY

### Problems to be Solved

Patent Document 1, which shows the gussets connecting the side walls of the strut towers (suspension towers) to the front wall (side wall) of the cowl top, fails to disclose a structure in which the gussets are connected so as to be superimposed on upper wall surfaces of the strut towers. It also fails to describe a structure for preventing deformation of the base parts of the strut towers. In Patent Document 2, the rod-like strut tower bar is provided to connect the upper parts of the right and left strut towers, which can cause a problem of the increase in vehicle weight.

In view of these technical problems, an objection of at least one embodiment of the present invention is to provide a vehicle body structure that can suppress the increase in vehicle weight, ensure stiffness between the strut towers, and improve the handling and stability of the vehicle body.

### Solution to the Problems

(1) A vehicle body structure according to at least one embodiment of the present invention comprises a cowl top connecting right and left front pillars of a vehicle and extending in a vehicle widthwise direction; a strut tower located in front of the cowl top and supporting a shock absorber constituting a suspension for a front wheel; and a pair of framework members extending in a front-rear direction on both sides of the vehicle widthwise direction of the vehicle, wherein the cowl top includes: a cowl top lower, which forms a lower part of the cowl top, extending in the vehicle widthwise direction and connected to the framework members on both sides of the vehicle widthwise direction; a reinforcement member connected to a lower side of the cowl top lower and extending in the vehicle widthwise direction so as to form a closed cross-sectional structure together with the cowl top lower; and a first joint where an end portion of the cowl top lower in the vehicle widthwise direction is connected to an upper surface of the strut tower so as to overlap and cover the upper surface.

With the above configuration (1), a closed cross-sectional structure is formed by the cowl top lower and the reinforcement member, and thereby it is possible to strongly couple the strut towers disposed on both sides in the vehicle widthwise direction.

Further, the existence of the first joint, where an end portion of the cowl top lower in the vehicle widthwise direction is connected to an upper surface of the strut tower so as to overlap and cover the upper surface, increases an area bonded with the strut tower and thus increases the bond strength, compared with a case where an end portion of the cowl top lower in the vehicle widthwise direction is bonded to a side wall of the strut tower. As a result, it is possible to strongly couple the strut towers disposed on both sides of the vehicle widthwise direction via the cowl top lower and the reinforcement member.

Moreover, with the first joint for connection so as to overlap and cover the upper surface of the strut tower, it is possible to suppress the fall of the upper part of the strut tower in the front-rear and right-left direction.

These structures of the reinforcement member and the first joint make it possible to ensure stiffness between the strut towers with a simple metal sheet connection structure, thus increasing the handling and stability of the vehicle body.
(2) In some embodiments, in the above configuration (1), the vehicle body structure further comprises a strut tower brace extending in a vertical direction along a side wall of the strut tower and bonded to the side wall of the strut tower to form a closed cross-sectional structure, the strut tower brace having an upper end connected to the reinforcement member.
   With the above configuration (2), the strut tower brace, forming a closed cross-sectional structure together with a side wall of the strut tower and extending in a vertical direction along the side wall of the strut tower, is provided, and thereby it is possible to improve the strength of the side wall of the strut tower.
(3) In some embodiments, in the above configuration (2), a lower end of the strut tower brace is positioned at a front base part of the strut tower, and the strut tower brace extends diagonally upward from a front side to a rear side of the vehicle body.
   With the above configuration (3), the lower end of the strut tower brace is positioned at a front base part of the strut tower while the strut tower brace extends diagonally upward from a front side to a rear side of the vehicle body, and thereby it is possible to suppress a deformation mode bending from the base part which is applied to the strut tower.
(4) In some embodiments, in the above configuration (2) or (3), an upper end of the strut tower brace has a first flange part which fixes a bottom wall of the reinforcement member.
   With the above configuration (4), the reinforcement member can be connected to an upper surface of the strut tower brace by the first flange part in such a manner that the reinforcement member is superimposed on the upper surface. Thus, it is possible to stably and strongly connect the strut tower brace and the reinforcement member.
(5) In some embodiments, in the above configuration (4), the upper end of the strut tower brace has a second flange part which supports a side wall of the reinforcement member.
   With the above configuration (5), the reinforcement member can be more stably fixed to the upper surface of the strut tower brace by the second flange part.
(6) In some embodiments, in the above configuration (1), each end portion of the reinforcement member in the vehicle widthwise direction is connected to a vehicle-rear-side side wall of strut tower on both sides in the vehicle widthwise direction, and a closed cross-sectional structure is formed by the vehicle-rear-side side walls of the strut tower, the cowl top lower, and the reinforcement member.
   With the above configuration (6), a cross-sectional structure is formed by the vehicle-rear-side side walls of the strut tower disposed on both sides in the vehicle widthwise direction, the cowl top lower, and the reinforcement member. That is, the cowl top lower and the reinforcement member form a closed cross-sectional structure in a cross-section along the vehicle body front-rear direction, and its ends in the vehicle body right-left direction are further closed by the side walls of the strut towers, so that a closed cross-sectional structure is formed also in the vehicle widthwise direction. As a result, it is possible to more strongly couple the strut towers provided on both sides of the vehicle widthwise direction.
(7) In some embodiments, in any of the above configurations (1) to (6), the framework member is disposed outside the strut tower in the vehicle widthwise direction and includes a second joint where the framework member is connected to the upper surface of the strut tower so as to overlap and cover the upper surface.
   The above configuration (7) includes the second joint, where an upper end of an upper side frame of the vehicle body frame member extending in the vehicle body front-rear direction is superimposed and connected to a vehicle outer portion of an upper surface of the strut tower. Thus, it is possible to effectively suppress the fall of the strut tower also by the upper side frame.

### Advantageous Effects

According to at least one embodiment of the present invention, it is possible to suppress the increase in vehicle weight, ensure stiffness between the strut towers, and improve the handling and stability of the vehicle body.

### BRIEF DESCRIPTION OF DRAWINGS

FIG. 1 is a schematic perspective diagram showing a vehicle body structure according to an embodiment.
FIG. 2 is a front view of a vehicle of FIG. 1.
FIG. 3 is an enlarged perspective view of a main part of FIG. 1.
FIG. 4 is an explanatory cross-sectional view taken along line A-A in FIG. 3.
FIG. 5 is an explanatory cross-sectional view taken along line B-B in FIG. 3.
FIG. 6 is an explanatory plan view of FIG. 1.
FIG. 7 is an explanatory cross-sectional view taken along line C-C in FIG. 6.
FIG. 8 is an explanatory diagram showing a configuration and an assembled state of main components.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

For instance, an expression of relative or absolute arrangement such as location and direction shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

A vehicle body structure of an automobile according to an embodiment of the present invention will be described.

Herein, the front-rear, right-left, and upper-lower direction means the front-rear, right-left, and upper-lower direction of a vehicle viewed from a driver's seat.

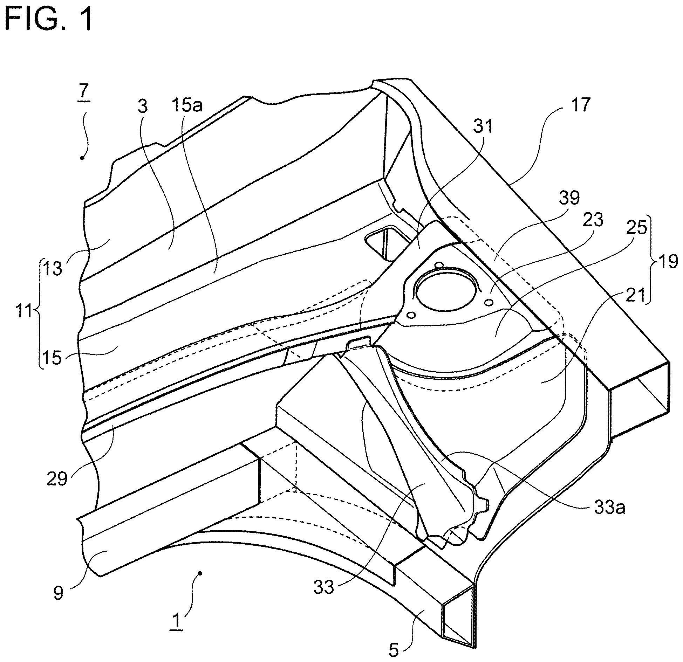

A vehicle body structure of an automobile in FIG. 1 shows a left portion of a structure on a dash panel 3 side around an engine room 1. A right-side vehicle body structure is symmetric to the left-side structure across a vehicle body center.

On both vehicle widthwise sides of a lower part of the engine room 1 which accommodates an engine and a transmission (not shown), a pair of side members 5 extend in the vehicle body front-rear direction. The engine room 1 and a passenger compartment 7 are separated by a dash panel 3. The pair of side members 5 inclines so as to go under the dash panel 3, and their rear portions extend under a floor panel. Additionally, a dash crossmember 9 extends under the dash panel 3 in the vehicle widthwise direction and connects the right and left side members 5.

Above the dash panel 3, a cowl top 11 extends in the vehicle widthwise direction. The cowl top 11 includes a cowl top upper 13 extending along an upper edge of the dash panel 3 and a cowl top lower 15 disposed under the cowl top upper 13 with a predetermined distance and extending in the vehicle widthwise direction.

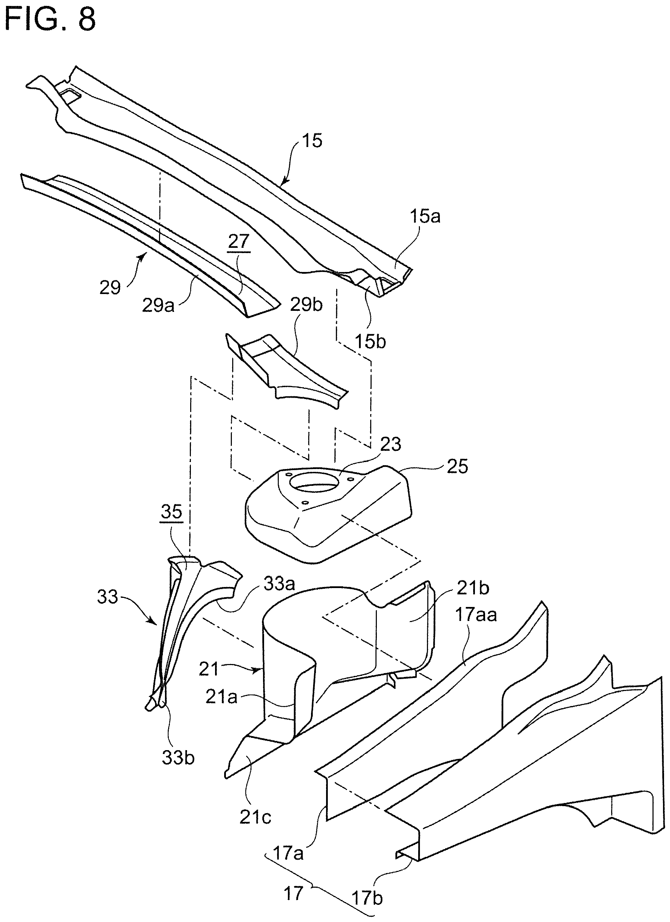

As shown in FIG. 8, the cowl top lower 15 has an open cross-sectional shape with a cross-section opening upward in the vehicle body, and a rear wall 15a of the cowl top lower is connected to a front surface of the dash panel 3.

Both end portions of the cowl top lower 15 are connected to upper side frames 17 which form vehicle body frame members extending in the vehicle body front-rear direction. As shown in FIG. 8, the upper side frame 17 is constructed by bonding an inner upper side frame 17a to an outer upper side frame 17b.

In front of both end portions of the cowl top 11 in the vehicle widthwise direction, a pair of strut towers 19 is provided which supports a strut front suspension suspending steered wheels, namely, front wheels. Each strut tower 19 includes a spring house body 21 which stands in the vertical direction and forms a main body, and a spring house top 25 which is bonded to an upper part of the spring house body 21 and provided with a support seat 23 for supporting a top portion of the shock absorber of the strut front suspension.

The spring house body 21 and the spring house top 25 are each formed of a sheet metal material and welded. As shown in FIG. 8, the spring house body 21 has a substantially semi-cylindrical shape and includes a spring house front flange part 21a projecting forward, a spring house rear flange part 21b projecting rearward, and a spring house lower flange part 21c projecting downward.

The spring house lower flange part 21c which forms a vehicle-inner-side lower part of the spring house body 21 is formed so as to be connected to the side member 5 disposed in the vehicle body front-rear direction. The upper side frame 17 is connected to a vehicle-outer-side side wall part of the spring house body 21. Further, the spring house rear flange part 21b which forms a rear edge side of the spring house body 21 is formed so as to be connected to the dash panel 3.

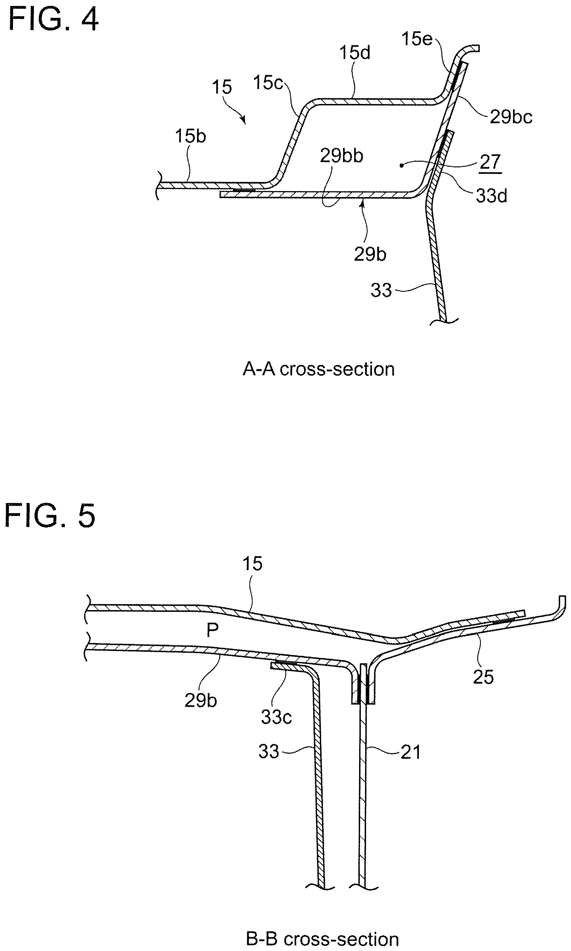

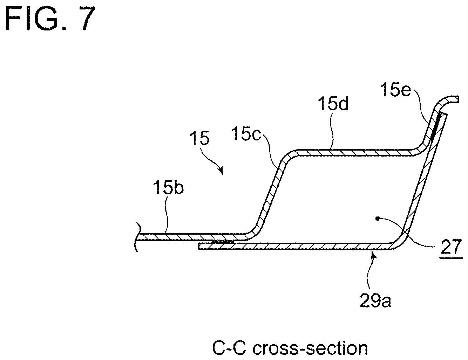

In some embodiments of the present invention, as shown in FIGs. 4 and 7, the cowl top lower 15, which forms a lower part of the cowl top 11, includes a first bottom wall 15b, a first side wall 15c rising from the first bottom wall 15b, a second bottom wall 15d connected to the first side wall 15c, and a second side wall 15e rising from the second bottom wall 15d, thus having a stepped cross-sectional shape.

Further, as shown in FIG. 4, the first bottom wall 15b of the cowl top lower 15 is bonded to a bottom wall 29bb of a side reinforcement member 29b of a reinforcement member 29, and the second side wall 15e of the cowl top lower 15 is bonded to a side wall 29bc of the side reinforcement member 29b of the reinforcement member 29 so that a closed cross-section is formed by the cowl top lower 15 and the reinforcement member 29. An opening space 27 of the closed cross-section extends in the vehicle widthwise direction.

Thus, the reinforcement member 29 is connected to a lower side (in other words, a lower surface or, if the cowl top lower 15 is substantially concave, an outer side) of the cowl top lower 15, and thereby forms a closed cross-sectional structure together with the cowl top lower 15.

Further, there is provided a cowl-top-lower superimposed joint (first joint) 31 where an end portion of the cowl top lower 15 in the vehicle widthwise direction is partially connected to an upper surface of the corresponding spring house top 25 so as to overlap and cover the upper surface.

As shown in FIG. 8, the reinforcement member 29 has a shape divided in the vehicle widthwise direction. This member is composed of a center reinforcement member 29a disposed at a middle portion and side reinforcement members 29b disposed on each of both right and left sides. The center reinforcement member 29a and the side reinforcement members 29b have the same cross-sectional shape and are connected by welding. The divided structure into the center portion and the side portions makes it easy to manufacture the reinforcement member 29 and connect the reinforcement member 29 to the bottom wall 15b of the cowl top lower 15.

Since a closed cross-sectional structure is formed by the bottom wall 15b of the cowl top lower 15 and the reinforcement member 29, the right and left spring house bodies 21 can be strongly coupled.

Additionally, the existence of the first joint 31, where an end portion of the cowl top lower 15 in the vehicle widthwise direction is partially connected to an upper surface of the spring house top 25 so as to overlap and cover the upper surface, increases an area bonded with the spring house body 21 via the spring house top 25 and thus increases the bond strength, compared with a case where an end portion of the cowl top lower 15 in the vehicle widthwise direction is bonded to a side wall of the spring house body 21. As a result, the right and left spring house bodies 21, i.e., the strut towers 19 provided on both sides in the vehicle widthwise direction can be more strongly coupled with the cowl top lower 15 and the reinforcement member 29 which form a closed cross-sectional structure.

The falling amount in the front-rear and right-left direction most significantly appears in upper parts of the spring house bodies 21. Thus, when the cowl top lower 15 is connected to the upper surfaces of the spring house tops 25 so as to overlap and cover the upper surfaces, it is possible to efficiently suppress the fall in the front-rear and right-left direction.

As described above, the structure including the reinforcement member 29 and the first joint 31 makes it possible to ensure stiffness between the strut towers 19 provided on both sides in the vehicle widthwise direction with a simple metal sheet connection structure and increase the handling and stability of the vehicle body.

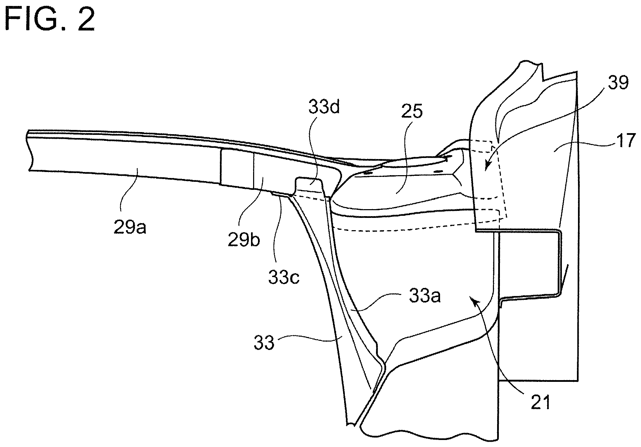

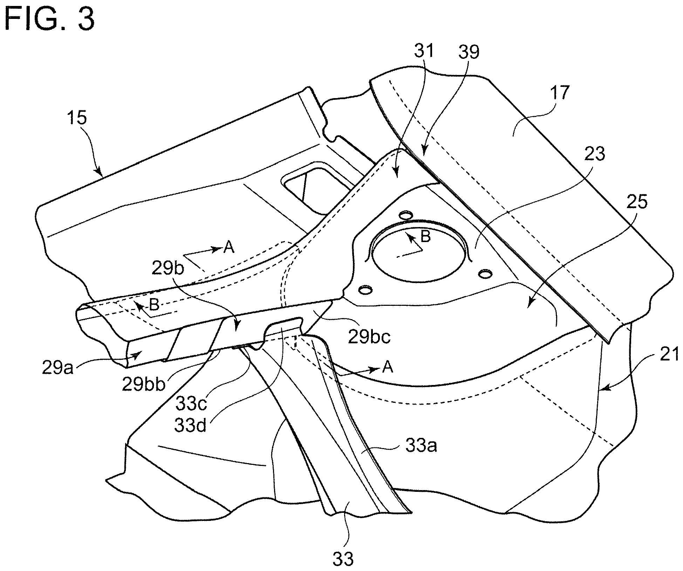

In some embodiments of the present invention, as shown in FIGs. 1 to 6 and 8, a tower brace 33 which extends vertically is connected to a vehicle-inner-side side wall surface of the spring house body 21.

As shown in FIG. 8, tower braces 33 have a cross-sectional shape with an opening 35 opening to the vehicle-inner-side side wall surface of the spring house body 21, and a mounting flange 33a is formed at a longitudinal opening edge. The tower brace 33 is connected by welding (e.g., spot welding) the mounting flange 33a to the vehicle-inner-side side wall surface of the spring house body 21.

Upper ends of the tower braces 33 are connected to the bottom walls 29bb of the side reinforcement members 29b. Since the tower braces 33 are connected to the bottom walls 29bb of the side reinforcement members 29b of the divided structure, i.e., since the side reinforcement members 29b are divided portions and thus can be easily handled, the tower braces 33 can be easily connected.

Additionally, since the tower braces 33 are vertically connected to side wall parts of the spring house bodies 21, it is possible to improve the strength of the spring house bodies 21. Further, since their upper ends are connected to the reinforcement member 29 through the side reinforcement members 29b, it is possible to further improve the bond strength of the right and left spring house bodies 21.

In some embodiments of the present invention, as shown in FIGs. 1, 2, 6, and 8, lower ends of the tower braces 33 are positioned at base parts of the substantially semi-cylindrical spring house bodies 21 on the front side of the spring house bodies 21, i.e., the lower end is positioned at a front portion of the spring house lower flange part 21c shown in FIG. 8. From this portion, the tower brace 33 extends rearward and diagonally upward.

Additionally, the lower ends of the tower braces 33 are located close to the side members 5 and connected to side wall parts of the spring house bodies 21.

Additionally, the lower ends of the tower braces 33 are provided with a lower end flange part 33b to ensure a welded surface, e.g., for spot welding.

With the configuration according to this embodiment, the lower ends of the tower braces 33 are positioned at front base parts of the substantially semi-cylindrical spring house bodies 21 while the tower braces 33 extend diagonally upward front a front side to a rear side of the vehicle body. Thus, the tower braces 33 serve to support a deformation mode bending from the base parts which is applied to the substantially semi-cylindrical shape of the spring house bodies 21. As a result, it is possible to efficiently suppress the deformation mode of bending from the base parts.

Further, since the lower ends of the tower braces 33 are connected to the side wall parts of the spring house bodies 21 at positions close to the side members 5, i.e., the lower ends of the tower braces 33 are positioned at portions into which the vibration from the engine or the transmission is input via the side members 5, it is possible to suppress the influence such as engine vibration to be input into the spring house bodies 21.

In some embodiments of the present invention, as shown in FIGs. 1 to 5 and 8, upper ends of the tower braces 33 have a first flange part 33c which fixes the bottom wall 29bb of the side reinforcement member 29b and a second flange part 33d which supports the side wall 29bc of the side reinforcement member 29b.

With the configuration according to this embodiment, the side reinforcement member 29b of the reinforcement member 29 is superimposed and connected to the upper surface of the first flange part 33c at the upper end of the tower brace 33. Thus, it is possible to stably and strongly connect the tower brace 33 and the side reinforcement member 29b.

Further, since the upper end of the tower brace 33 has the second flange part 33d which supports the side wall 29bc of the side reinforcement member 29b, it is possible to more stably fix the side reinforcement member 29b of the reinforcement member 29 to the upper surface of the upper end of the tower brace 33 by the second flange part 33d.

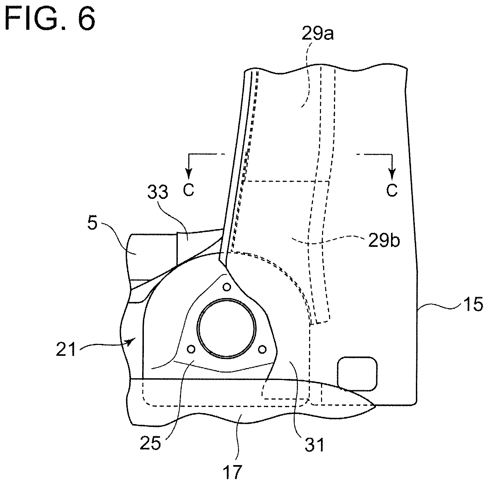

In some embodiments of the present invention, as shown in FIGs. 1 to 8, end portions of the side reinforcement members 29b of the reinforcement member 29 in the vehicle widthwise direction are connected to vehicle-inner-side side walls of the spring house bodies 21 (see FIG. 6), and a closed cross-sectional structure is formed in a vehicle widthwise cross-section by the vehicle-inner-side side walls of the right and left spring house bodies 21, the cowl top lower 15, the reinforcement member 29 and the side reinforcement members 29b. For instance, a portion of a closed cross-sectional space P shown in FIG. 5 is formed.

With the configuration according to this embodiment, a cross-sectional structure is formed in a vehicle widthwise cross-section by the vehicle-inner-side side walls of the right and left spring house bodies 21, the cowl top lower 15, the reinforcement member 29, and the side reinforcement members 29b. Thus, end portions in the vehicle body right-left direction are closed by the vehicle-inner-side side walls of the spring house bodies 21, so that a closed cross-sectional structure is formed also in the vehicle widthwise direction. As a result, it is possible to further improve connection stiffness between the strut towers 19 provided on both sides of the vehicle widthwise direction.

In some embodiments of the present invention, as shown in FIGs. 1 to 3, 6, and 8, upper side frames 17, which are vehicle body frame members extending in the vehicle body front-rear direction, are provided on vehicle-outer sides of the right and left spring house bodies 21. An upper-end flange 17aa at an upper end of the inner upper side frame 17a of each upper side frame 17 is connected to a vehicle-outer-side portion of the upper surface of the spring house top 25 so as to overlap and cover the vehicle-outer-side portion from outside of the vehicle body, thus forming an upper-frame-superimposed joint (second joint) 39.

With the configuration according to this embodiment, the upper-end flanges 17aa of the inner upper side frames 17a, which constitute the upper side frames 17 of the vehicle body frame members extending in the vehicle body front-rear direction, are superimposed and connected to the vehicle-outer sides of the spring house tops 25, thus forming second joints 39. This makes it possible to efficiently achieve the suppression of fall of the right and left spring house bodies 21, i.e., the strut towers 19 provided on both sides of the vehicle widthwise direction, also by means of the upper side frames 17.

Additionally, the two covering connection structures obtained by forming the first joints 31 and the second joints 39 on the upper surfaces of the spring house tops 25 make it possible to ensure stiffness between the strut towers and improve the handling and stability of the vehicle body.

### Industrial Applicability

According to at least one embodiment of the present invention, it is possible to suppress the increase in vehicle weight, ensure stiffness between the strut towers, and improve the handling and stability of the vehicle body. Thus, it is suitable for the vehicle body structure around the strut towers of the vehicle.

### Reference Signs List

- 1: Engine room
- 3: Dash panel
- 5: Side member
- 7: Passenger compartment
- 11: Cowl top
- 13: Cowl top upper
- 15: Cowl top lower
- 17: Upper side frame
- 19: Strut tower
- 21: Spring house body
- 23: Support seat
- 25: Spring house top
- 29: Reinforcement member
- 31: First joint (cowl-top-lower superimposed joint)
- 33: Strut tower brace
- 33c: First flange part
- 33d: Second flange part
- 39: Second joint (upper-frame-superimposed joint)

## Claims

1. A vehicle body structure comprising:
a cowl top extending in a vehicle widthwise direction of the vehicle;
a strut tower located in front of the cowl top and supporting a shock absorber of a front wheel; and
a pair of framework members extending in a front-rear direction on both sides of the vehicle widthwise direction of the vehicle,
wherein the cowl top includes:
a cowl top lower, which forms a lower part of the cowl top, extending in the vehicle widthwise direction and connected to the framework members on both sides of the vehicle widthwise direction;
a reinforcement member connected to a lower side of the cowl top lower and extending in the vehicle widthwise direction so as to form a closed cross-sectional structure together with the cowl top lower; and
a first joint where an end portion of the cowl top lower in the vehicle widthwise direction is connected to an upper surface of the strut tower so as to overlap and cover the upper surface.

2. The vehicle body structure according to claim 1, further comprising a strut tower brace extending in a vertical direction along a side wall of the strut tower and bonded to the side wall of the strut tower to form a closed cross-sectional structure, the strut tower brace having an upper end connected to the reinforcement member.

3. The vehicle body structure according to claim 2,
wherein a lower end of the strut tower brace is positioned at a front base part of the strut tower, and the strut tower brace extends diagonally upward from a front side to a rear side of the vehicle body.

4. The vehicle body structure according to claim 2 or 3,
wherein an upper end of the strut tower brace has a first flange part which fixes a bottom wall of the reinforcement member.

5. The vehicle body structure according to claim 4,
wherein the upper end of the strut tower brace has a second flange part which supports a side wall of the reinforcement member.

6. The vehicle body structure according to claim 1,
wherein each end portion of the reinforcement member in the vehicle widthwise direction is connected to a vehicle-rear-side side wall of each of strut towers on both sides in the vehicle widthwise direction, and a closed cross-sectional structure is formed by the vehicle-rear-side side walls of the strut towers, the cowl top lower, and the reinforcement member.

7. The vehicle body structure according to any one of claims 1 to 6,
wherein the framework member is disposed outside the strut tower in the vehicle widthwise direction and includes a second joint where the framework member is connected to the upper surface of the strut tower so as to overlap and cover the upper surface.
